(19) Europäisches Patentamt
European Patent Office
Office européen des brevets

(11) Publication number: **0 431 430 A2**

# (12) EUROPEAN PATENT APPLICATION

(21) Application number: **90122485.7**

(22) Date of filing: **26.11.90**

(51) Int. Cl.5: **C08G 18/10**, C08G 18/48, C08G 18/76

(30) Priority: **06.12.89 US 446963**

(43) Date of publication of application: **12.06.91 Bulletin 91/24**

(84) Designated Contracting States: **AT BE CH DE DK ES FR GB IT LI NL SE**

(71) Applicant: **BASF Corporation**
**9 Campus Drive**
**Parsippany, NJ 07054(US)**

(72) Inventor: **Narayan, Thirumurti**
**8800 Sarah Lane**
**Grosse Ile, Michigan 48138(US)**

(74) Representative: **Mutzbauer, Helmut, Dr. et al**
**BASF Aktiengesellschaft Patentabteilung**
**ZSP-C 6 Carl-Bosch-Strasse 38**
**W-6700 Ludwigshafen(DE)**

## (54) New prepolymers derived from polymeric MDI and polytetramethylene ether glycols.

(57) The present invention is a prepolymer or quasi-prepolymer formed from the reaction of a given amount of a diisocyanate having at least 5 percent of polymethylene polyphenyl isocyanate and polytetramethylene ether glycols having a molecular weight between 150 and 3000. The glycol may be combined with other polyether or polyester glycols. The resulting NCO-terminated prepolymer or quasi polymer is a liquid which is stable at a temperature of 0 ° C for at least 24 hours.

EP 0 431 430 A2

Xerox Copy Centre

## NEW PREPOLYMERS DERIVED FROM POLYMERIC MDI AND POLYTETRAMETHYLEHE ETHER GLYCOLS

The present invention pertains to prepolymers and quasi-prepolymers. More particularly, the present invention relates to new prepolymer and quasi-prepolymer compositions derived from the reaction of polymeric MDI containing at least 5 percent by weight of 3 ring and higher oligomers and polytetramethylene ether glycols of varied molecular weights.

Numerous prepolymer and quasi-prepolymer compositions are known for use in the manufacture of polyurethane and other polymeric compounds.

Generally, the most important diisocyanates which are readily available on a large commercial scale are the 2,4' and the 4,4'-isomers of diphenylmethane diisocyanate which melt at 34.5° C and 39° C respectively. The liquid form of the diisocyanate is highly useful and attempts have been made to liquify both the 4,4' diphenylmethane diisocyanate and a small amount of the 2,4' isomer. The serious drawback to these compositions is that the adducts crystalize anywhere from 5° C to as high as 25° C.

Diisocyanate compounds which are the reaction products of a diphenylmethane diisocyanate containing at least 15% by weight of the 2,4'-isomer with either propylene glycol or a poly-1,2 propylene ether glycol are taught in U.S. Patent No. 4,118,411.

U.S. Patent No. 4,115,429 to Reiff et al discloses novel prepolymers and quasi-prepolymers stable at low temperatures which are derived from the reaction of MMDI having at least 20 percent by weight up to 70 percent by weight of 2,4'MDI content with polyoxyethylene glycols having molecular weights from 150 to 1500.

It is to be appreciated, however, that there still exists a need for other prepolymers and quasi-prepolymers which exhibit good stability and varied applications.

The present invention provides liquid, low temperature stable prepolymers and quasi-prepolymers which are derived from the reaction of polymethylene polyphenyl isocyanate containing at least 5 percent by weight 3 ring and higher oligomers and polytetramethylene ether glycols of varied molecular weights to provide NCO-terminated prepolymers and quasi-prepolymers having from about 10 to about 96 percent by weight, polymethylene polyphenyl isocyanate (polymeric MDI).

The polytetramethylene ether glycol component includes polytetramethylene ether glycols ranging in molecular weight from 150 to 3000.

Blends of the polytetramethylene ether glycol and polyether polyols based on ethylene oxide, propylene oxide, and butylene oxide or polyester polyols can be used.

The process for preparing the prepolymer or quasi-prepolymer generally comprises the steps of:

(a) heating the three ring or higher oligomer of polymeric isocyanate to a temperature of about 60°;

(b) adding the polytetramethylene ether glycol or a blend thereof with a conventional polyether polyol to the polyisocyanate at a constant rate over a period of about 1 to 2 hours; and

(c) heating the reactants for 1 to 2 hours at 80° C.

The NCO content of the new prepolymer/quasi-prepolymer compositions of the present invention range from .5 percent by weight to 33 percent by weight. The prepolymer and quasi-prepolymer products are useful as is or together with other components such as chain extenders, catalysts, blowing agents, and solvents in the formation of polyurethane elastomers, sealants, film and the like.

For a more complete understanding of the present invention, reference is made to the following detailed description and accompanying examples.

As hereinabove noted, the present invention provides novel quasi-prepolymer and prepolymers which are liquid at low temperatures and are based on three ring and higher oligomers of polymethylene polyphenyl isocyanate and polytetramethylene ether glycols. Such prepolymers and quasi-prepolymers utilizing the polytetramethylene ether glycols in combination with the polymethylene polyphenyl isocyanate mixture containing at least 5 percent by weight of the three ring and higher oligomers of the polymethylene polyphenyl isocyanate. The present invention is, therefore, directed to novel isocyanate compounds which comprise the reaction product of a polymethylene polyphenyl isocyanate containing at least 5 percent by weight of the three ring and higher oligomers of polymeric MDI with either polytetramethylene ether glycol or blends of polytetramethylene ether glycol and polyether polyols based on ethylene oxide, propylene oxide, and butylene oxide or polyester polyols.

The prepolymer, generally, contains from about 10.0 to 95 percent by weight of the polyphenyl isocyanate and from about 5 to about 90 percent by weight of the glycol and preferably from about 50 to about 80 percent by weight of the polyphenyl isocyanate and from about 5.0 to about 50 percent by weight of the glycol. In general, the polymethylene polyphenyl isocyanate usable according to the instant invention must contain at least 5 percent by weight of the three ring and higher oligomers of polymethylene

polyphenyl isocyanate. Theoretically, there is no upper limit to the amount of polymethylene polyphenyl isocyanate which could be present in the isocyanate. Higher levels of the polymeric MDI are desirable as the polyphenyl isocyanate concentration lowers the melting point of the isocyanate. Accordingly, the polyphenyl isocyanate used in the present invention, will generally contain from about 5 percent to about 95.5 percent by weight of the three ring and higher oligomer of polymethylene polyphenyl isocyanate with the balance being the 4,4'-isomer, the 2,2'-isomer and the 2,4'-isomer and/or various MDI dimers (the 2,2'-isomer and any dimer are generally present only in trace amounts). Preferably, the polymethylene polyphenyl-isocyanate content is from about 40 to about 96 percent by weight and most preferably from about 50 to 96 percent by weight.

The polyol component used to prepare the NCO-terminated prepolymers and/or quasi-prepolymers is a polytetramethylene ether glycol ranging in molecular weight from 150 to 3000. The glycol is commercially available and sold by the BASF Corporation under the trade name POLY THF$^R$.

The polytetramethylene ether glycol may be used alone or as a mixture of such varying molecular weight glycols. Likewise, the glycol may be used as a blend thereof with a polyether glycol or a polyester glycol. Suitable polyether glycols are those prepared by the oxyalkylation of a dihydric alcohol such as ethylene glycol, propylene glycol, butylene glycol, neopentyl glycol, 1,6-hexane diol, hydroquinone, resorcinal, the bis phenols, aniline, and other aromatic monoamines, aliphatic monoamines and monoesters of glycerine with ethylene oxide, propylene oxide, butylene oxide and the like. The oxy alkylation of such dyhydric alcohols, is of course well known.

Polyester glycols are those which are conventionally employed in the art and which comprise the reaction product of a polycarboxylic acid with an excess of polyol. As noted, these polyester glycols are well known and commercially available.

Where a blend is used, generally, it will contain from about 5 to 90 percent by weight of the polytetramethylene ether glycol and from about 90 to about 5 percent by weight of the polyether glycol. Preferably, the blend will contain from about 10 to about 80 percent by weight of polytetramethylene ether glycol and from about 80 to about 10 percent by weight of the polyether glycol.

The glycol and isocyanate can be reacted at temperatures ranging anywhere from 30 °C up to 100 °C. Preferably the reaction temperature is from about 50 °C to about 80 °C. The reaction time range is from 1 to 10 hours, and preferably from 1 to 3 hours.

The isocyanate content of the present process generally ranges from as low as 5 percent to as high as about 96 percent.

Viscosity of the resulting prepolymer or quasi-prepolymer is dependent upon the amount of polymethylene polyphenyl isocyanate present in the reaction. The greater the concentration of polyphenyl isocyanate present, the higher the viscosity of the resulting product.

The products of the process can be used "as is" for all types of different polyaddition reactions in the plastic industries, and may be reacted with chain extenders, catalysts, solvents and the like where flexible polyurethane polymers are desired, such as polyurethane elastomers, sealants, films and the like.

In preparing polyurethane elastomers, etc. herefrom the NCO-terminated prepolymers may be reacted alone or with another isocyanate and a polyhydric compound according to conventional polyurethane technology, in the presence of catalysts, chain extenders, etc. and the like.

By the term "polyurethane" is meant a polymer whose structure contains predominantly urethane

$$-\!\!\left( NH-\overset{\overset{\displaystyle O}{\|}}{C}-O \right)\!\!-$$

linkages between repeating units. Such linkages are formed by the addition reaction between an organic isocyanate group R{NCO} and an organic hydroxyl group [HO]-R. In order to form a polymer, the organic isocyanate and hydroxyl group-containing compounds must be at least difunctional. However, as modernly understood, the term "polyurethane" is not limited to those polymers containing only urethane linkages, but includes polymers containing allophanate, biuret, carbodiimide, oxazolinyl, isocyanurate, uretidinedione, and urea linkages in addition to urethane. The reactions of isocyanates which lead to these types of linkages are summarized in the Polyurethane Handbook, Gunter Vertel, Ed., Hanser Publications, Munich, ©1985, in Chapter 2, pages 7-41; and in Polyurethanes: Chemistry and Technology, J.H. Saunders and K.C. Frisch, Interscience Publishers, New York, 1963, Chapter III, pages 63-118. In addition to polyols (polyhydroxyl-containing monomers), the most common isocyanate-reactive monomers are amines and alkanolamines. In

these cases, reaction of the amino group leads to urea linkages interspersed within the polyurethane structure.

The urethane forming reaction is generally catalyzed. Catalysts useful are well known to those skilled in the art, and many examples may be found for example, in the Polyurethane Handbook, Chapter 3, Section 3.4.1 on pages 90-95; and in Polyurethanes: Chemistry and Technology in Chapter IV, pages 129-217. Most commonly utilized catalysts are tertiary amines and organotin compounds, particularly dibutyltin diacetate and dibutyltin dilaurate. Combinations of catalysts are often useful also.

In the preparation of polyurethanes, the isocyanate is reacted with the active hydrogen-containing compound(s) in an isocyanate to active hydrogen ratio of from 0.5 to 1 to 10 to 1. The "index" of the composition is defined as the -NCO/active hydrogen ratio multiplied by 100. While the extremely large range described previously may be utilized, most polyurethane processes have indices of from 90 to about 120 or 130, and more preferably from 95 to about 10. In the case of polyurethanes which also contain significant quantities of isocyanurate groups, indices of greater then 200 and preferably greater then 300 may be used in conjunction with a trimerization catalyst in addition to the usual polyurethane catalysts. In calculating the quantity of active hydrogens present, in general all active hydrogen containing compounds other then non-dissolving solids are taken into account. Thus the total in inclusive of polyols, chain extenders, functional plasticizers, etc.

Hydroxyl group-containing compounds (polyols) useful in the preparation of polyurethanes are described in the Polyurethane Handbook in Chapter 3, Section 3.1 pages 42-61; and in Polyurethanes: Chemistry and Technology in Chapter II, Sections III and IV, pages 32-47. Many hydroxyl-group containing compounds may be used, including simple aliphatic glycols, dihydroxy aromatics, bisphenols, and hydroxy-terminated polyethers, polyesters, and polyacetals, among others. Extensive lists of suitable polyols may be found in the above references and in many patents, for example in columns 2 and 3 of U.S. Patent No. 3,652,639; columns 2-6 of U.S. Patent No. 4,421,872; and columns 4-6 of U.S. Patent No. 4,310,632; these three patents being hereby incorporated by reference.

Preferably used are hydroxyl-terminated polyoxy-alkylene and polyester polyols. The former are generally prepared by well known methods, for example by the base catalyzed addition of an alkylene oxide, preferably ethylene oxide (oxirane), propylene oxide (methyloxirane) or butylene oxide (ethyloxirane) to an initiator molecule containing on the average two or more active hydrogens. Example of preferred initiator molecules are dihydric initiators such as ethylene glycol, propylene glycol, butylene glycol, neopentyl glycol, 1,6-hexanediol, hydroquinone, resorcinol, the bisphenols, aniline and other aromatic monoamines, aliphatic monoamines, and monoesters of glycerine; trihydric initiators such as glycerine, trimethylolpropane, trimethylolethane, N-alkyl-phenylenediamines, mono-, di-, and trialkanolamines; tetrahydric initiators such as ethylene diamine, propylenediamine, 2,4'-, 2,2'-, and 4,4'-methylenedianiline, toluenediamine, and pentaerythritol; pentahydric initiators such as diethylene-triamine; and hexahydric and octahydric initiators such as sorbitol and sucrose.

Addition of alkylene oxide to the initiator molecules may take place simultaneously or sequentially when more than one alkylene oxide is used, resulting in block, heteric, and block-heteric polyoxyalkylene polyethers. The number of hydroxyl groups will generally equal the number of active hydrogens in the initiator molecule. Processes for preparing such polyethers are described both in the Polyurethane Handbook and Polyurethanes: Chemistry and technology as well as in many patents, for example U.S. Patent Nos. 1,922,451; 2,674,619; 1,922,459; 3,190,927; and 3,346,557.

Polyester polyols also present preferred polyurethane-forming reactants. Such polyesters are well known in the art and are prepared simply by polymerizing polycarboxylic acids or their derivatives, for example their acid chlorides or anhydrides, with a polyol. Numerous polycarboxylic acids are suitable, for example malonic acid, citric acid, succinic acid, glutaric acid, adipic acid, pimelic acid, azelaic acid, sebacic acid, maleic acid, fumaric acid, terephthalic acid, and phthalic acid. Numerous polyols are suitable, for example the various aliphatic glycols, trimethylolpropane and trimethylolethane, -methylglucoside, and sorbitol. Also suitable are low molecular weight polyoxyalkylene glycols such as polyoxyethylene glycol, polyoxypropylene glycol, and block and heteric polyoxyethylene-polyoxypropylene glycols. These lists of dicarboxylic acids and polyols are illustrative only, and not limiting. An excess of polyol should be used to ensure hydroxyl termination, although carboxy groups are also reactive with isocyanates. Methods of preparation of such polyester polyols are given in the Polyurethane Handbook and in Polyurethanes: Chemistry and Technology.

Also suitable as the polyol are polymer modified polyols, in particular the so-called graft polyols. Graft polyols are well known to the art, and are prepared by the in situ polymerization of one or more vinyl monomers, preferably acrylonitrile and styrene, in the presence of a polyether or polyester polyol, particularly polyols containing a minor amount of natural or induced unsaturation. Methods of preparing

such graft polyols may be found in columns 1-5 and in the Examples of U.S. Patent No. 3,652,639; in columns 1-6 and the Examples of U.S. Patent No. 3,828,201; particularly in columns 2-8 and the Examples of U.S. Patent No. 4,690,956; and in U.S. Patent No. 4,524,157; all of which patents are herein incorporated by reference.

Non-graft polymer modified polyols are also preferred, for example those prepared by the reaction of a polyisocyanate with an alkanolamine in the presence of a polyol as taught by U.S. Patent Nos. 4,293,470; 4,296,213; and 4,374,209; dispersions of polyisocyanurates containing pendant urea groups as taught by U.S. Patent No. 4,386,167; and polyisocyanurate dispersion also containing biuret linkages as taught by U.S. Patent No. 4,359,541. Other polymer modified polyols may be prepared by the in situ size reduction of polymers until the particle size is less than 20 um, preferably less than 10 um.

Also useful in preparing polyurethanes are monomers containing other functional groups which are reactive with isocyanates. Examples of these are preferably the amines, for example the substituted and unsubstituted toluenediamines and methylenedianilines; the alkanolamines; the amino-terminated polyoxyalkylene polyethers; and sulfhydryl terminated polymers, to name but a few. The alkanolamines and amines, particularly diamines, are particularly useful, as the amino group reacts faster than the hydroxyl group and thus these molecules can act as isocyanate chain extenders in situ without the need to prepare prepolymers. Examples of hindered, alkyl substituted aromatic diamines which are particularly useful are disclosed in U.S. Patent No. 4,218,543.

Many isocyanates are useful in the preparation of urethanes. Examples of such isocyanates may be found in columns 8 and 9 of U.S. Patent No. 4,690,956, herein incorporated by reference. The isocyanates preferred are the commercial isocyanates such as toluene diioscyanate (TDI) methyene bis(phenylene isocyanate) (MDI), and crude or polymeric MDI or blends thereof. Other isocyanates which may be useful include isophorone diisocyanate and tetramethylxylyledene diisocyanate. Other isocyanates may be found in the Polyurethane Handbook, Chapter 3, Section 3.2 pages 62-73 and Polyurethanes: Chemistry and Technology Chapter II, Section II, pages 17-31.

Modified isocyanates are also useful. Such isocyanates are generally prepared through the reaction of a commercial isocyanate, for example TDI or MDI, with a low molecular weight diol or amine, or alkanolamine, or by the reaction of the isocyanates with themselves. In the former case, isocyanates containing urethane, biuret, or urea linkages are prepared, while in the latter case isocyanates containing allophanate, carbodiimide, or isocyanurate linkages are formed.

Chain extenders may also be useful in the preparation of polyurethanes. Chain extenders are generally considered to be low molecular weight polyfunctional compounds or oligomers reactive with the isocyanate group. Aliphatic glycol chain extenders commonly used include ethylene glycol, propylene glycol, 1,4-butanediol, and 1,6-hexanediol. Amine chain extenders include aliphatic monoamines but especially diamines such as ethylenediamine and in particular the aromatic diamines such as the toluenediamines and the alkylsubstituted (hindered) toluenediamines.

Other additives and auxiliaries are commonly used in polyurethanes. These additives include plasticizers, flow control agents, fillers, antioxidants, flame retardants, pigments, dyes, mold release agents, and the like. Many such additives and auxiliary materials are discussed in the Polyurethane Handbook in Chapter 3, Section 3.4, pages 9-109; and in Polyurethanes: Chemistry and Technology, Part II, Technology.

In practicing a polyurethane elastomer in accordance herewith, preferably, the prepolymer hereof is reacted, alone, or with an additional polyisocyanate.

In forming the polyurethane, the isocyanate is, ordinarily, reacted with polyether polyol, chain extenders, fillers and catalysts.

The components are reacted in stoichiometric quantities to provide the final product.

The chain extenders, catalysts, etc. are employed in conventional amounts.

It is to be appreciated that quasi-prepolymers and prepolymers based on three ring and higher oligomers of the polymethylene polyphenyl isocyanate and polytetramethylene ether glycols, stable at lower temperatures are novel in the art. The quasi polymers and prepolymers of the present invention remain as liquids at temperatures as low as about 0 °C. These quasi polymers and prepolymers are an advancement in the art as they can be transported and stored at lower temperatures. Also, even if the prepolymers are frozen they will thaw readily at room temperature without heating.

For a more complete understanding of the present invention, following are specific illustrative examples showing the preparation of various prepolymers in accordance with the present invention. In the examples all parts are by weight absent contrary indications.

The invention is further illustrated by the following examples in which all parts are by weight unless otherwise specified.

EXAMPLES 1-4

These examples illustrate the preparation of a quasi-prepolymer in accordance with the present invention. Into a suitable reaction vessel equipped with an addition funnel, an inlet for N2 gas, heating means and a stirrer, was charged the isocyanate. With stirring, the glycol was added thereto at a constant rate over a period of 1 to 2 hours, with the temperature being held at 60° C. The reaction mixture was then heated to a temperature of about 80° C for 1 to 2 hours. The product was then characterized by the determination of the NCO content and viscosity. Table I set forth below defines the ingredients and their amounts.

TABLE 1

| Example No. | Polymethylene Polyphenyl Isocyanate (% by wt) | Polytetramethylene Glycol Type | Polytetramethylene Glycol (% by wt) | % NCO | Viscosity cps, 25°C |
|---|---|---|---|---|---|
| 1 | 95 | A | 5.0 | 28.9 | 200 |
| 2 | 93 | B | 7.0 | 28.8 | 168 |
| 3 | 70 | C | 30 | 19.7 | 5,800 |
| 4 | 50 | D | 50 | 13.2 | 26,100 |

A = a 250 molecular weight polytetramethylene glycol

B = a 650 molecular weight polytetramethylene glycol

C = a 1000 molecular weight polytetramethylene glycol

D = a 2000 molecular weight polytetramethylene glycol

## Claims

**1.** A prepolymer composition comprising the reaction product of:
a) a polymethylene polyphenyl isocyanate comprising at least about 5 percent by weight of three ring and higher oligomers; and
b) polytetramethylene ether glycol having a molecular weight from about 150 to about 3000.

**2.** The prepolymer of Claim 1 wherein the isocyanate comprises:
a) from about 5 to about 96 percent by weight of the polymethylene polyphenyl isocyanate.

**3.** The prepolymer of Claim 2 wherein the isocyanate comprises from about 10 percent to about 96 percent by weight of the polymethylene polyphenyl isocyanate.

**4.** The prepolymer of Claim 1 wherein the prepolymer has an NCO content from about 0.5 to about 30 percent by weight.

**5.** The prepolymer of Claim 1 wherein the prepolymer has an NCO content of from about 10 to about 30 percent by weight.

**6.** The prepolymer of Claim 1 wherein
a) the isocyanate is present in an amount ranging from about 10 to about 96 percent by weight;
b) the polytetramethylene ether glycol is present in an amount ranging from about 4 percent to

about 50 percent by weight.

7. The prepolymer of Claim 1 wherein the polytetramethylene ether glycol has a molecular weight of 1000.

8. The prepolymer of Claim 1 which further comprises: a second glycol whioh is selected from the group consisting of a polyether glycol, a polyester glycol and mixtures thereof.

9. The prepolymer of Claim 6 wherein the second glycol is present in an amount ranging from about 5 to about 90 percent by weight based on total weight of the prepolymer.

10. A process for the production of an NCO-terminated prepolymer which comprises:
1) reacting together at a temperature ranging from about 25° C to about 90° C, a polymeric isocyanate containing at least 5 percent by weight of polymethylene polyphenyl isocyanate and a polytetramethylene ether glycol having a molecular weight ranging from about 150 to about 3000.

11. The process of Claim 10 which further comprises reacting the glycol as a blend with a second glycol selected from group consisting of a polyether glycol, a polyester glycol and mixtures thereof.

12. The process of Claim 10 wherein the isocyanate is present in an amount ranging from about 10 to 90 percent by weight based on total weight and

13. The process of Claim 10 wherein
a) the isocyanate is present in an amount ranging from 10 to 96 percent by weight based on total weight; and
b) the polytetramethylene ether glycol is present in an amount ranging from about 4 to about 50 percent by weight based on total weight.

14. The process of Claim 10 wherein the polytetramethylene ether glycol has a molecular weight of 650.